# EUROPEAN PATENT APPLICATION

(11) **EP 0 787 863 A1**
(43) Date of publication of application: **06.08.1997**
(21) Application number: 97630010.3
(22) Date of filing: 31.01.1997
(51) Int. Cl.: E03B 9/20, E03C 1/16

(54) **Bathroom sink faucet**

(30) Priority: 02.02.1996 KR 9601610
(71) Applicant: Jeong, Jang Jo, Changwon-city, Kyungnam (KR)
(72) Inventor: Jeong, Jang Jo, Changwon-city, Kyungnam (KR)
(74) Representative: Weydert, Robert

(57) **Abstract**

Disclosed is a bathroom sink faucet including a branch pipe (5), branched off from a faucet water pipe (4) or a main water line, an open/close device (20) controlling an outflow of water from the branch pipe (5), and a control device (21) for controlling pressure of the water flowing into the branch pipe (5).

## Description

### BACKGROUND OF THE INVENTION

### 1. Field of the Invention

The present invention relates to a bathroom sink faucet and, more particularly, to a bathroom sink faucet which allows a user to easily rinse his or her mouth after tooth brushing and for the effortless drinking of water by providing a fountain pipe formed upwardly on the faucet for enabling a user to direct water upwards.

### 2. Description of the Prior Art

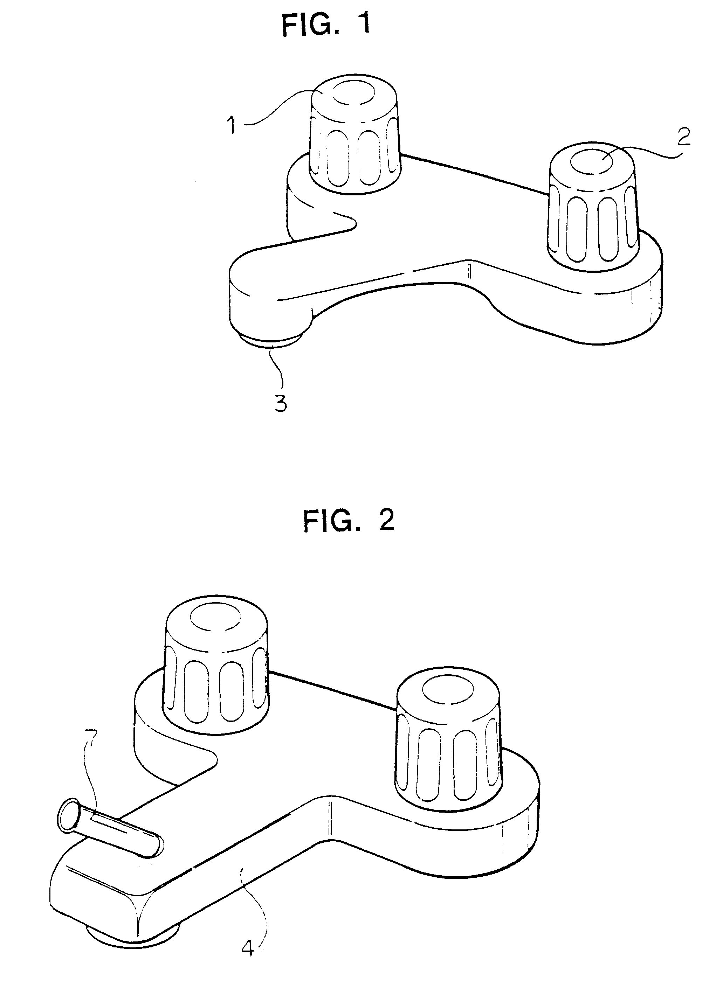

Referring to Fig. 1, there is shown the prior art bathroom sink faucet. The faucet includes a hot water faucet handle 1 and a cold water faucet handle 2 for controlling the amount of water flow and temperature. There is also provided a water outlet 3 through which water flows downwardly.

With the above prior art bathroom sink faucet, the user must bend over in an awkward position to drink water or to get water for rinsing by directly placing his or her mouth to the water outlet 3. This is both troublesome and unhygienic. Also, as many families use a common cup placed on the bathroom sink for rinsing after brushing, germs can easily spread from one family member to another. Further, an unnecessarily large amount of water is utilized when using a cup for rinsing making water conservation efforts difficult.

### SUMMARY OF THE INVENTION

The present invention has been made in an effort to solve the above problems.

It is an object of the present invention to provide a bathroom sink faucet which, through a branch pipe branched off from a faucet water pipe of a bathroom sink, allows water to be directed upwards for easy and hygienic mouth rinsing and drinking, making the use of a cup for these purposes unnecessary.

To achieve the above object, the present invention provides a bathroom sink faucet, comprising: a branch pipe, branched off from a faucet water pipe or a main water line: open/close means for controlling an outflow of water from the branch pipe: and control means for controlling pressure of the water flowing into the branch pipe.

According to a feature of the present invention, the open/close means comprises a branch pipe checking member tightly mounted in a distal end of the branch pipe and having a hollow ball provided with a cut-out portion to define an inlet communicating with the branch pipe and a fountain pipe extending upward from and integrally formed with the hollow ball to communicate with the hollow ball such that through the inlet, water is able to flow outward via the fountain pipe and the hollow ball.

According to another feature of the present invention, the control means comprises a water pressure regulator valve formed in the vicinity of a proximal end of the branch line and including an orifice into which water first flows, a ball which blocks the orifice, and a spring for exerting a predetermined amount of force on the ball to maintain the latter in an intial, closed position.

It is still another feature of the present invention that the control means comprises a water pressure regulator valve formed in the fountain pipe.

The control means comprises a valve formed on the fountain pipe to allow a user to adjust the amount of water flowing out the fountain pipe.

According to yet another feature of the present invention, the control means comprises an adjusting member formed on an outside of the fountain pipe, the adjusting member including a ball having a passage hole, the rotation of the ball enabling the opening and closing of the fountain.

According to another feature of the present invention, the open/close means comprises an ON/OFF valve provided in the branch pipe for opening and closing the same.

It is preferable that the control means comprises a water pressure regulator valve formed in the branch pipe.

According to still another feature of the present invention, the open/close means is designed to be connected to a water faucet handle such that when the water faucet handle is rotated partway by a user, the branch pipe remains closed while the faucet water pipe is open, and when further rotated, the open/close means allows for both the branch pipe and faucet water pipe to be open.

It is still another feature of the present invention that the branch pipe is a hose which connected to a main water line, leading up to the faucet water pipe, and a fountain pipe is provided at an end of the hose through which water flows for the user.

According to yet another feature of the present invention, the fountain pipe includes an ON/OFF button for easy manipulation by user

According to still another feature of the present invention, a holder is mounted to a side of the bathroom sink onto which the fountain pipe is placed when not in use.

According to another feature of the present invention, a separate fountain pipe instead of the branch pipe is attached to the main water line at an area below the bathroom sink, the separate fountain pipe extending out through a top of the bathroom sink having a fountain pipe at an end thereof.

An internal ON/OFF valve is provided inside the bathroom sink such that the fountain pipe can be ON/OFF controlled by the pivoting of the separate fountain pipe.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
Fig. 1 is a perspective view of the prior art bathroom sink faucet;
Fig. 2 is a perspective view of a bathroom sink faucet according to a first embodiment of the present invention;
Fig. 3 is a partial sectional view of the bathroom sink faucet according to the first embodiment of the present invention;
Figs. 4A and 4B are partial sectional views respectively taken along lines A-A and B-B of Fig. 3;
Figs. 5A, 5B, and 5C are views illustrating modified examples of the bathroom sink faucet according to the first embodiment of the present invention;
Figs. 6A and 6B are internal views of a bathroom sink faucet according to a second embodiment of the present invention;
Fig. 7 is an internal view of a bathroom sink faucet according to a third embodiment of the present invention;
Fig. 8 is a perspective view of a bathroom sink faucet according to a fourth embodiment of the present invention;
Fig. 9 is a schematic view of a bathroom sink faucet according to a fifth embodiment of the present invention;
Fig. 10 is a schematic view of a bathroom sink faucet according to a sixth embodiment of the present invention;
Fig. 11A is a schematic view of a bathroom sink faucet according to a seventh embodiment of the present invention;
Figs. 11B and 11C are views illustrating operational states of the bathroom sink faucet shown in Fig. 11A;
Fig. 12 is a schematic view of a bathroom sink faucet according to a eighth embodiment of the present invention;
Fig. 13 is a schematic views illustrating a bathroom sink faucet according to a ninth embodiment of the present invention; and
Fig. 14 is a schematic view illustrating a modified example of the bathroom sink faucet according to the ninth embodiment of the present invention.

### DESCRIPTION OF THE PREFERRED EMBODIMENTS

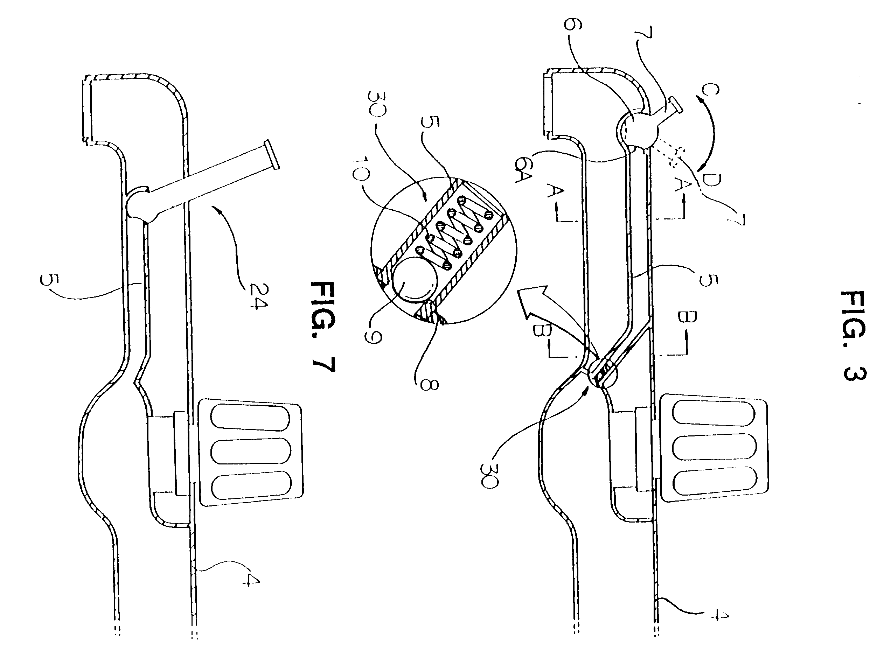

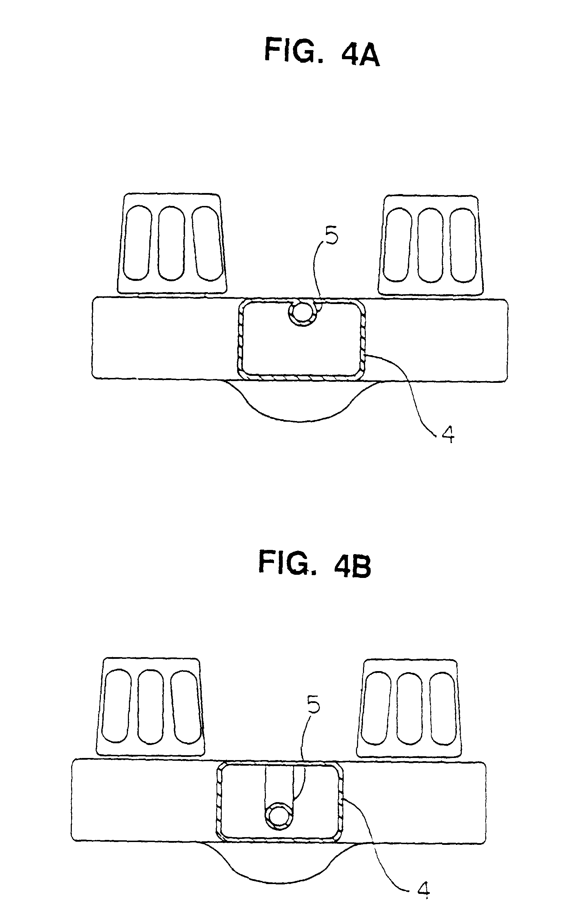

Preferred embodiments of the present invention will now be described in detail with reference to the accompanying drawings. Referring first to Figs. 2 to 4, a bathroom sink faucet according to a first embodiment of the present invention includes a bathroom sink faucet water pipe 4, a branch pipe 5 having a proximal end 51 defined inside the faucet water pipe 4 and a distal end 52 defined on an upper side of the faucet water pipe 4, and a branch pipe checking member 61 tightly mounted in the distal end 52 of the branch pipe 5 and having a hollow ball 6 provided with a cut-out portion to define an inlet 6A communicating with the branch pipe and a fountain pipe 7 extending upward and integrally formed with the hollow ball to communicate with the same such that through the inlet 6A, water flows outward via the hollow ball 6 and fountain pipe 7.

A water pressure regulator valve 30 is formed in the vicinity of the proximal end 51 of the branch pipe 5. The water pressure regulator valve 30 regulates the pressure of the water flowing into the branch pipe 5. The water pressure regulator valve 30 is comprising of an orifice 8 into which water first flows, a ball 9 which blocks the orifice 8, and a spring 10 for exerting a predetermined amount of force on the ball 9 to maintain the latter in an initial position (i.e., in a position closing the orifice 8).

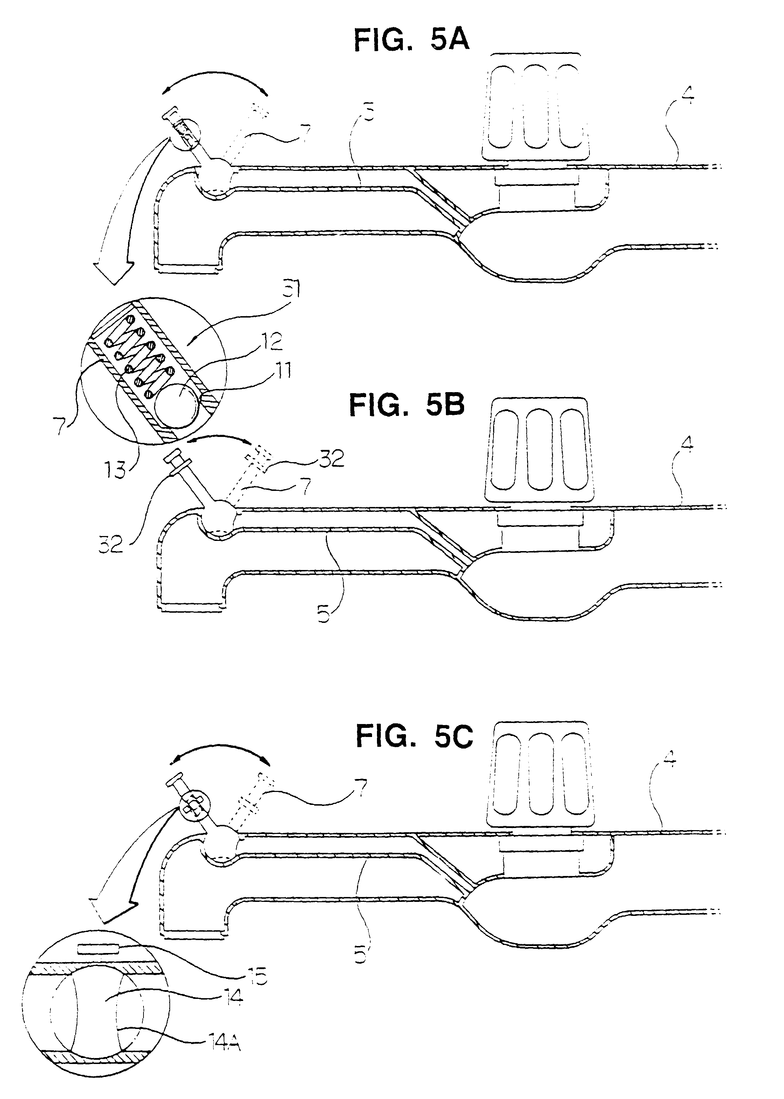

Referring to Fig. 5A, there is shown a modified example of the bathroom sink faucet according to the first embodiment of the present invention. This example is structured identically to that of the above except that a water pressure regulator valve 31 is formed in the fountain pipe 7 and not in the branch pipe 5. As in the above structure, the water pressure regulator valve 31 includes an orifice 11, a ball 12 which sits over the orifice 11 to close the same, and a spring 13 which elastically biases the ball 12. As shown in Fig. 5B, there is shown another modified example of the first embodiment of the present invention. The bathroom sink faucet according to this example includes a valve 32 formed on the fountain pipe 7 to allow a user to adjust the amount of water flowing out the fountain pipe 7. By user manipulation of the valve 32, an inner diameter of the fountain pipe 7 can be adjusted, thereby allowing the adjustment of the amount of water flow.

Fig. 5C shows yet another modified example of the first embodiment of the present invention. As shown in the drawing, an adjusting member 15 is formed on an outside of the fountain pipe 7. The adjusting member 15 rotates a ball 14, rotatably mounted inside the fountain pipe 7 and including a passage hole 14a, to open and close the fountain pipe 7.

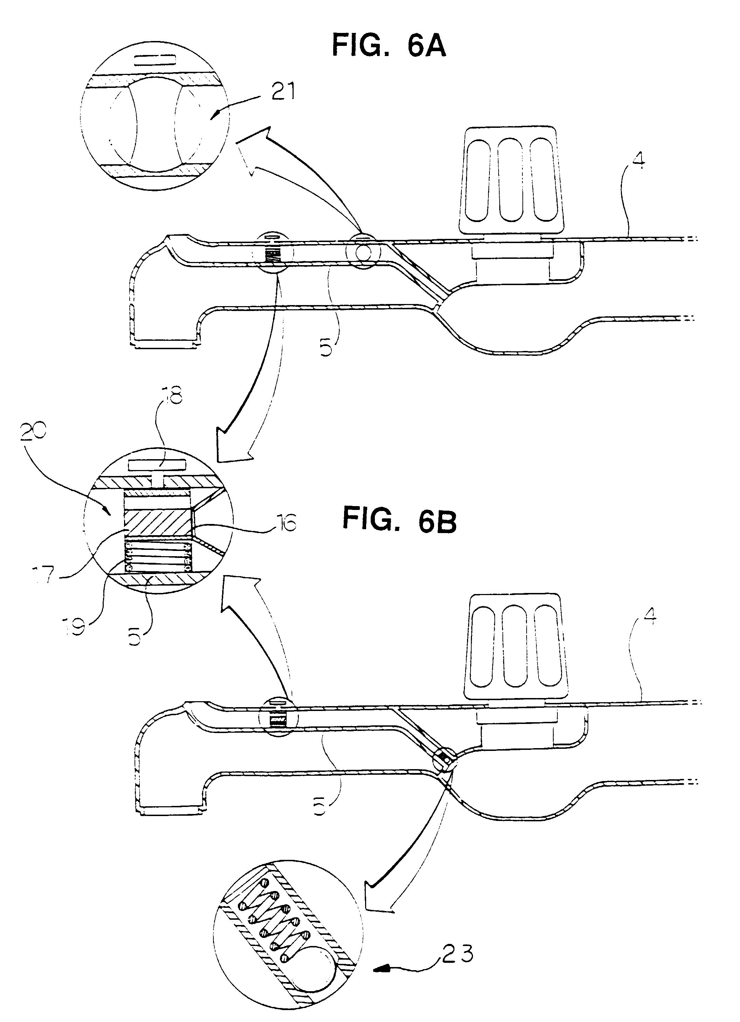

Referring now to Fig. 6A, there is shown a second embodiment of a bathroom sink faucet of the present invention. As illustrated in the drawing, an ON/OFF valve 20 is provided in the branch pipe 5 for opening and closing the same. The ON/OFF valve 20 includes an orifice 16 through which water flows, a shut-off plate 17 for blocking the flow of water, a control member 18 formed extending externally in the branch pipe 5 and which raises and lowers the shut-off plate 17 to open and close the orifice 16, and a spring for elastically biasing the shut-off plate 17 such that the same is maintained in a state blocking the flow of water unless the control member 18 is manipulated by the user. Further, a water pressure regulator valve 21 is also formed in the branch pipe 5. The water pressure regulator valve 21 regulates the water such that it flows through the branch pipe 5 evenly at a predetermined level of pressure.

In Fig. 6B, there is shown an modified example of the bathroom sink faucet of the second embodiment of the present invention. In this modified example, a water pressure regulator valve 23 is formed in a proximal end 51 of the branch pipe 5. The water pressure regulator valve 23 performs the identical function as that of the above valve 21 of Fig. 6A.

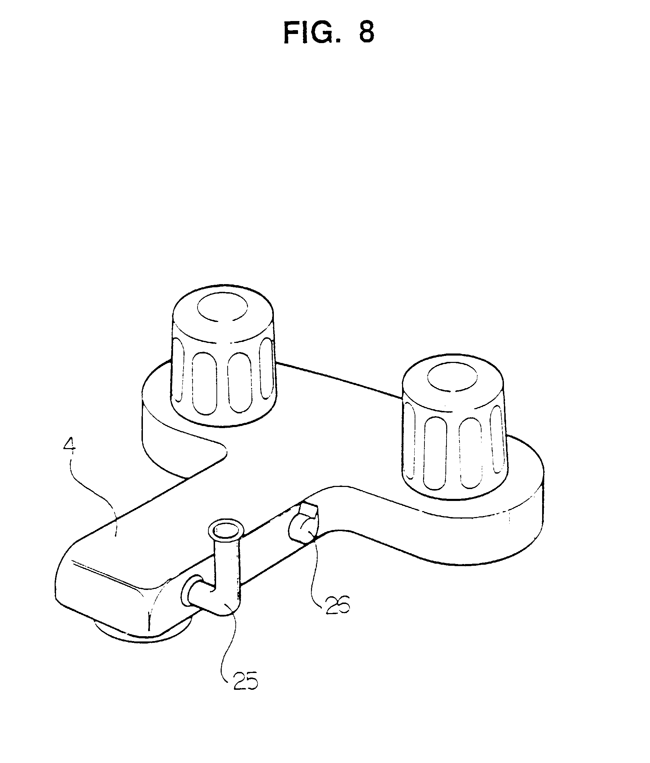

Referring to Fig.7, there is shown a bathroom sink faucet according to a third embodiment of the present invention. As shown in the drawing, the branch pipe 5 is formed in a lower part of the faucet water pipe 4, and a nozzle-type ON/OFF valve 24, which opens and closes the branch pipe 5, is mounted in a distal end 52 of the branch pipe 5 communicating with the same.

Referring to Fig. 8, which illustrates a fourth embodiment of the present invention, an ON/OFF valve 25 for selectively opening and closing the branch pipe 5 is formed protruding out of the faucet water pipe 4. Also, there a water pressure regulator valve 26 is formed on the outside of the faucet water pipe 4 for controlling the flow of water.

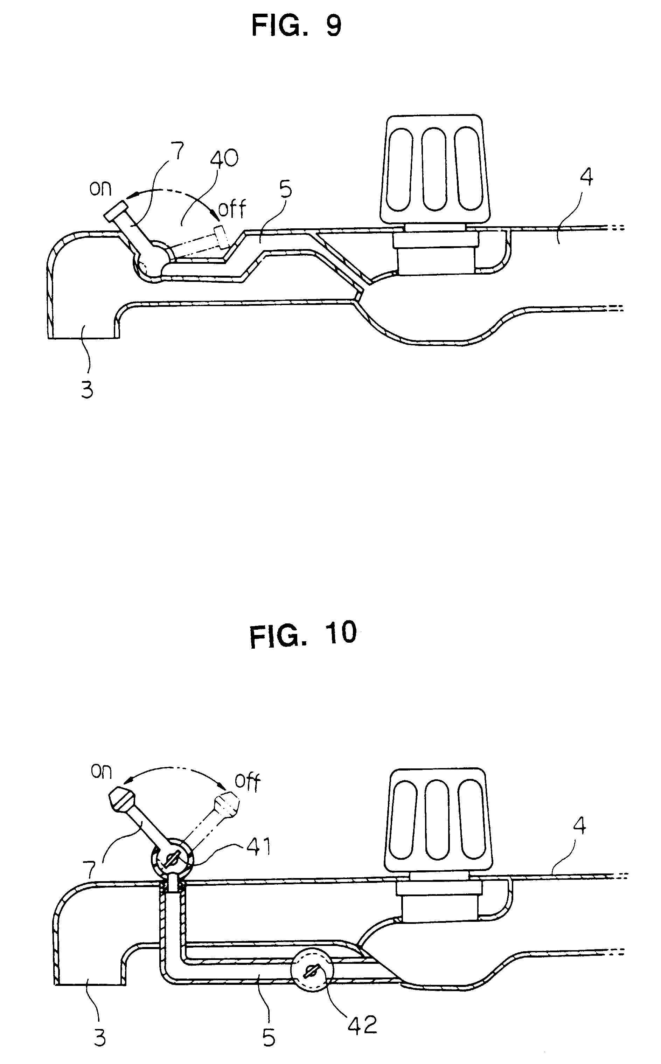

As shown in Fig. 9, illustrating a fifth embodiment of the present invention, the outside of the faucet water pipe 4 is formed having a space 40 such that the fountain pipe 7, formed in a distal end of the branch pipe 5, is able to fold into the space 40 when not in use.

Referring now to Fig. 10, there is shown a sixth embodiment of the present invention. As shown in the drawing, the branch pipe 5 is formed branched off outside the faucet water pipe 4. Further, first and second regulator valves 41 and 42 are provided integrally with the fountain pipe 7 and on the branch pipe 5, respectively. The first and second regulator valves 41 and 42 allow for the adjustment of water flow through the branch pipe 5 such that a reduction in water pressure can be prevented when a main outlet 3 of the faucet water pipe 4 and the branch pipe are simultaneously open.

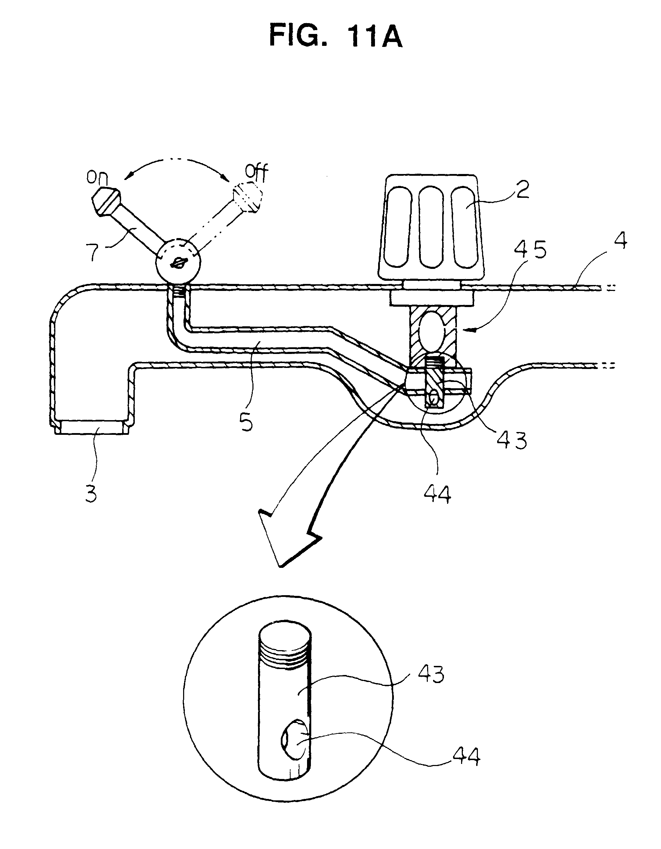

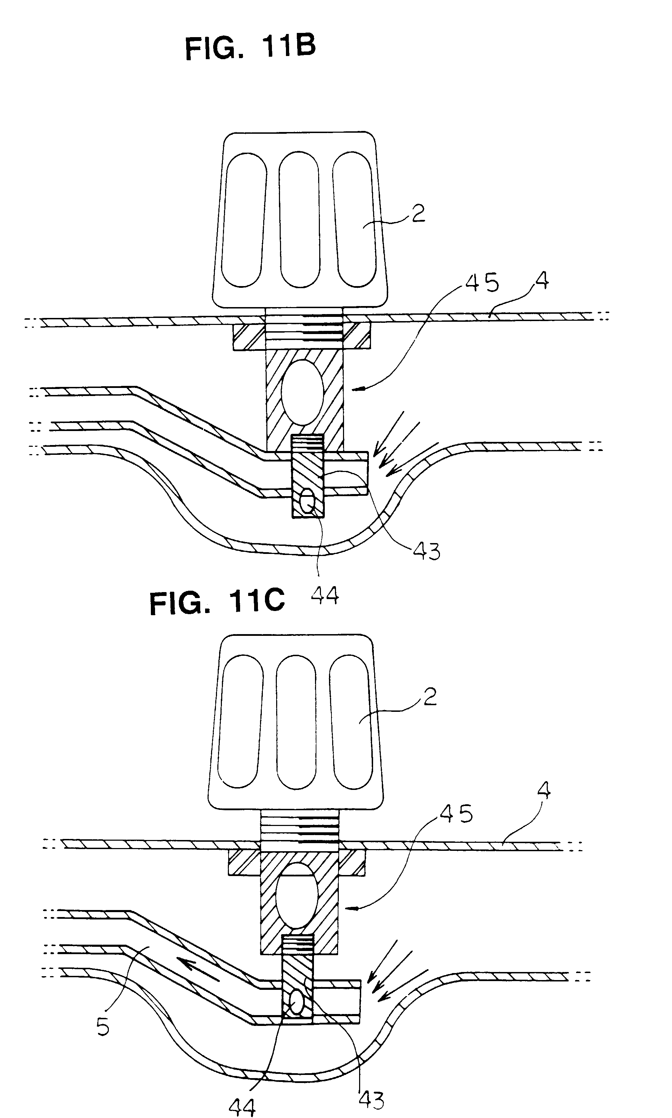

Referring to Fig. 11A, there is illustrated a seventh embodiment of the present invention. As shown in the drawing, there is provided a regulator valve 41 formed integrally with the fountain pipe 7 as in the sixth embodiment. Also, an open/close valve 45 is connected to a water faucet handle 2 such that when the water faucet handle 2 is rotated partway by the user, the branch pipe 5 remains closed while the faucet water pipe 4 is open as shown in Fig. 11B, and when further rotated, the open/close valve 45 allows for both the branch pipe 5 and faucet water pipe 4 to be open as shown in Fig. 11C.

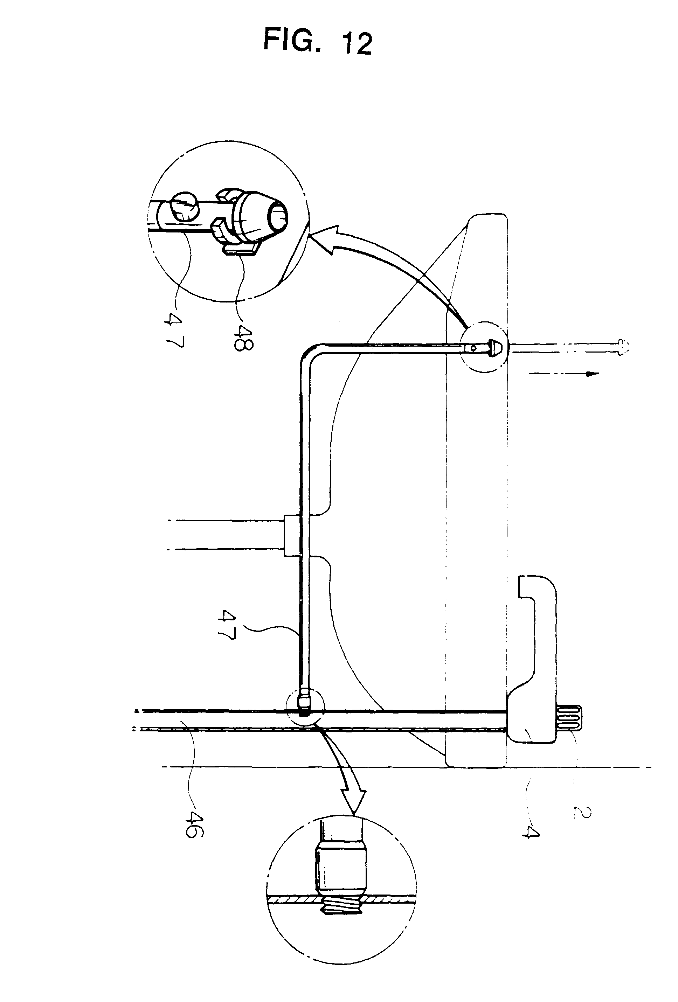

As shown in Fig. 12, illustrating an eighth embodiment of the present invention, a hose 47 is connected to a main water line 46. leading up to the faucet water pipe 4. Further, a fountain pipe 7 is provided at an end of the hose 47 through which water flows for the user. The fountain pipe 7 includes an ON/OFF button 50 for easy manipulation by user, and a holder 48 is mounted to a side of the bathroom sink onto which the fountain pipe 7 is placed when not in use. Accordingly, the user can remove the fountain pipe 7 connected to the hose 47 from the holder 48, after which he or she presses the ON/OFF button 50 when wanting to drink water or use it for mouth-rinsing purposes.

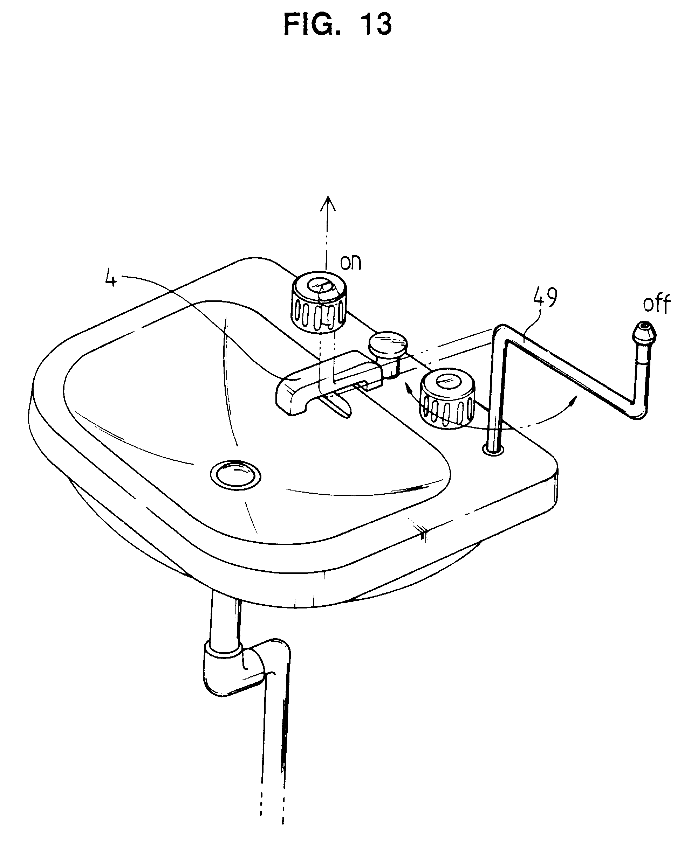

Referring to Fig. 13, illustrating a ninth embodiment of the present invention, a separate fountain pipe 49 is branched of from the main water line (not shown) at an area below the bathroom sink. The separate fountain pipe 49 extends out through a top of the bathroom sink having a fountain pipe 7 at an end thereof. An internal ON/OFF valve (not shown) is provided inside the bathroom sink such that the fountain pipe 7 can be ON/OFF controlled by the pivoting of the separate fountain pipe 49. That is, the fountain pipe 7 is in an OFF or initial state when it is positioned toward a back of the sink, and in an ON state when positioned toward the front of the sink, when the separate fountain pipe 49 is pivoted toward the front of the sink.

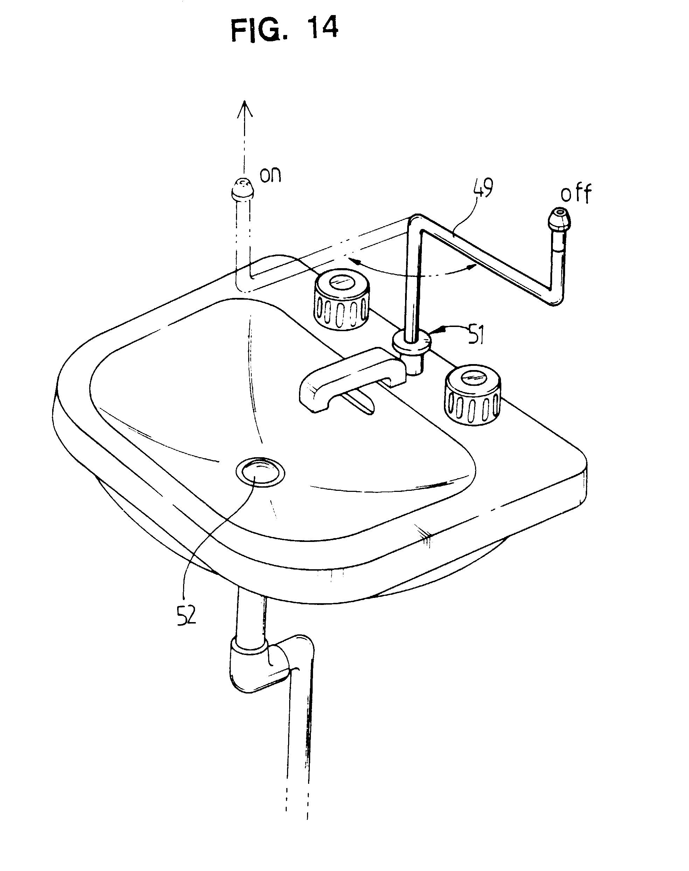

Referring to Fig. 14, there is shown a modified example of the ninth embodiment of the present invention. Here, the separate fountain pipe 49 is provided at a location in a center (where a stopper control handle is normally placed) and above the sink.

In the bathroom sink faucet of the present invention structured as in the above, as water is able to be directed upwards, the user can easily and hygienically access water for mouth rinsing and drinking, making the unhygienic use of a cup and the uncomfortable and awkward bending over for these purposes unnecessary.

While this invention has been described in connection with what is presently considered to be the most practical and preferred embodiment, it is to be understood that the invention is not limited to the disclosed embodiments, but, on the contrary, is intended to cover various modifications and equivalent arrangements included within the spirit and scope of the appended claims.

## Claims

1. A bathroom sink faucet, comprising:
a branch pipe, branched off from a faucet water pipe or a main water line;
open/close means for controlling an outflow of water from the branch pipe; and
control means for controlling pressure of the water flowing into the branch pipe.

2. The bathroom sink faucet of claim 1, wherein the open/close means comprises a branch pipe checking member tightly mounted in a distal end of the branch pipe and having a hollow ball provided with a cut-out portion to define an inlet communicating with the branch pipe and a fountain pipe extending upward from and integrally formed with the hollow ball to communicate with the hollow ball such that through the inlet, water is able to flow outward via the fountain pipe and the hollow ball.

3. The bathroom sink faucet of claim 1, wherein the control means comprises a water pressure regulator valve formed in the vicinity of a proximal end of the branch line and including an orifice into which water first flows, a ball which blocks the orifice, and a spring for exerting a predetermined amount of force on the ball to maintain the latter in an intial, closed position.

4. The bathroom sink faucet of claim 1, wherein the control means comprises a water pressure regulator valve formed in the fountain pipe.

5. The bathroom sink faucet of claim 1, wherein the control means comprises a valve formed on the fountain pipe to allow a user to adjust the amount of water flowing out the fountain pipe.

6. The bathroom sink faucet of claim 1, wherein the control means comprises an adjusting member formed on an outside of the fountain pipe, the adjusting member including a ball having a passage hole, the rotation of the ball enabling the opening and closing of the fountain.

7. The bathroom sink faucet of claim 1, wherein the open/close means comprises an ON/OFF valve provided in the branch pipe for opening and closing the same.

8. The bathroom sink faucet of claim 1, wherein the control means comprises a water pressure regulator valve formed in the branch pipe.

9. The bathroom sink faucet of claim 1, wherein the open/close means is designed to be connected to a water faucet handle such that when the water faucet handle is rotated partway by a user, the branch pipe remains closed while the faucet water pipe is open, and when further rotated, the open/close means allows for both the branch pipe and faucet water pipe to be open.

10. The bathroom sink faucet of claim 1, wherein the branch pipe is a hose which is connected to a main water line, leading up to the faucet water pipe, and a fountain pipe is provided at an end of the hose through which water flows for the user.

11. The bathroom sink faucet of claim 10, wherein the fountain pipe 7 includes an ON/OFF button for easy manipulation by the user

12. The bathroom sink faucet of claim 10, wherein a holder is mounted to a side of the bathroom sink onto which the fountain pipe is placed when not in use.

13. The bathroom sink faucet of claim 1, wherein a separate fountain pipe instead of the branch pipe is attached to the main water line at an area below the bathroom sink, the separate fountain pipe extending out through a top of the bathroom sink having a fountain pipe at an end thereof.

14. The bathroom sink faucet of claim 14, wherein an internal ON/OFF valve is provided inside the bathroom sink such that the fountain pipe can be ON/OFF controlled by the pivoting of the separate fountain pipe.

15. The bathroom sink faucet of claim 15, wherein the separate fountain pipe is provided at a location in a center (where a stopper control handle is normally placed) and above the sink.
